# EUROPÄISCHE PATENTSCHRIFT

(11) **EP 2 984 368 B1**
(45) Veröffentlichungstag und Bekanntmachung des Hinweises auf die Patenterteilung: **01.04.2020**
(21) Anmeldenummer: 13756815.0
(22) Anmeldetag: 13.08.2013
(51) Int. Cl.: F16H 1/22, F03D 1/06

(54) **MOMENTENLAGER, WINDKRAFTANLAGE UND FAHRZEUG**
TORQUE BEARING, WIND TURBINE, AND VEHICLE
PALIER À COUPLE, ÉOLIENNE ET VÉHICULE

(30) Priorität: 12.04.2013 DE 102013006281
(43) Veröffentlichungstag der Anmeldung: 17.02.2016
(73) Patentinhaber: IMO Holding GmbH, 91350 Gremsdorf (DE)
(72) Erfinder: SCHROEPPEL, Werner, 90530 Wendelstein (DE); DIETZ, Volker, 91315 Höchstadt a.d. Aisch (DE); FRANK, Hubertus, 91315 Höchstadt a. d. Aisch (DE)
(74) Vertreter: Schmidt, Steffen J.
(86) Internationale Anmeldenummer: PCT/EP2013/002426
(87) Internationale Veröffentlichungsnummer: WO 2014/166512

(56) Entgegenhaltungen:
- EP-A- 1 650 431
- EP-A1- 2 570 655
- EP-A2- 1 150 039
- EP-A2- 1 959 129
- WO-A1-99/24730
- WO-A2-2006/131301
- CN-A- 102 644 561
- DE-U1- 9 311 316
- US-A- 4 307 621
- US-A1- 2012 073 890

## Beschreibung

Die Erfindung betrifft ein Momentenlager, bzw. eine derartig ausgestaltete Vorrichtung zum Drehverstellen mindestens eines verzahnten Lagerringes unter Eingriff mindestens eines der Vorrichtung zugehörigen oder daran ankoppelbaren Ritzels/Zahnrads, alternativ über wenigstens eine zusätzliche mit diesem Ritzel/ Zahnrad kämmende Zahnradgetriebestufe, vorzugsweise zum Antreiben oder zum Drehverstellen wenigstens eines Ringes eines Turmlagers, alternativ zum Antreiben oder zum Drehverstellen wenigstens eines Ringes eines Blattlagers, vorzugsweise wobei die Vorrichtung zum Antreiben oder zum Drehverstellen an einer Anlage oder in einer Windkraftanlage oder an/auf einem Fahrzeug oder an/auf einem sonstigen Maschinenteil angebracht ist.

Die vorliegende Erfindung ist besonders dadurch gekennzeichnet, dass die Vorrichtung wenigstens eine Wälzkörperreihe beherbergt, welche zwischen zwei oder mehr als zwei gegeneinander verdrehbaren und zueinander konzentrisch angeordneten Gehäuseteilen derselben Vorrichtung angeordnet ist, wobei eines der Gehäuseteile an einem ersten, vorzugsweise ringförmigen, Befestigungskörper anlegbar ist oder, beispielsweise mittels mehrerer ringförmig angeordneter Schrauben, daran befestigbar ist, während das zweite Gehäuseteil an einem zu dem ersten Befestigungskörper relativ verstellbaren, beispielsweise konzentrisch geformten, zweiten, Befestigungskörper anlegbar ist oder, beispielsweise mittels mehrerer ring- oder kranzförmig angeordneter Schrauben, hiermit verbindbar ist, alternativ wobei das zweite Gehäuseteil und der zweite Befestigungskörper gar einstückig ausgebildet sind, beispielsweise somit der verbindenden Schrauben entbehren, und wobei die Vorrichtung mindestens eine Anschlussmöglichkeit für einen anschließbaren Motor, beispielsweise einen Elektromotor oder einen Hydraulikmotor, aufweist, wobei dieser Motor mit je einer verzahnte Welle mechanisch koppelbar ist und diese Welle um ihre Mitten- oder Drehachse rotatorisch treibt.

Weitere Merkmale ergeben sich aus der Beschreibung und gemäß den Ansprüchen.

Stand der Technik und aktuelle Probleme:
Laut dem vorherrschenden Stand der Technik verfügen beispielsweise moderne Windkraftanlagen in einer Standardausführung, stark vereinfacht ausgedrückt, über die folgenden Grundbausteine oder Grundsegmente: Eine Basisbaugruppe mit einem Fundament oder Unterwassergründungsmitteln, eine Gondel mit Maschinenhaus und/oder Maschinenträger, eine Nabe an welcher eines oder mehrere Blätter, insbesondere drei Blätter, befestigt sind sowie über Sensorik und Regelinstrumente zum effizienten Betrieb der Windkraft- oder Windenergieanlage (abgekürzt: WKA oder engl.: WPG) und deren Instrumente bzw. Aggregate.

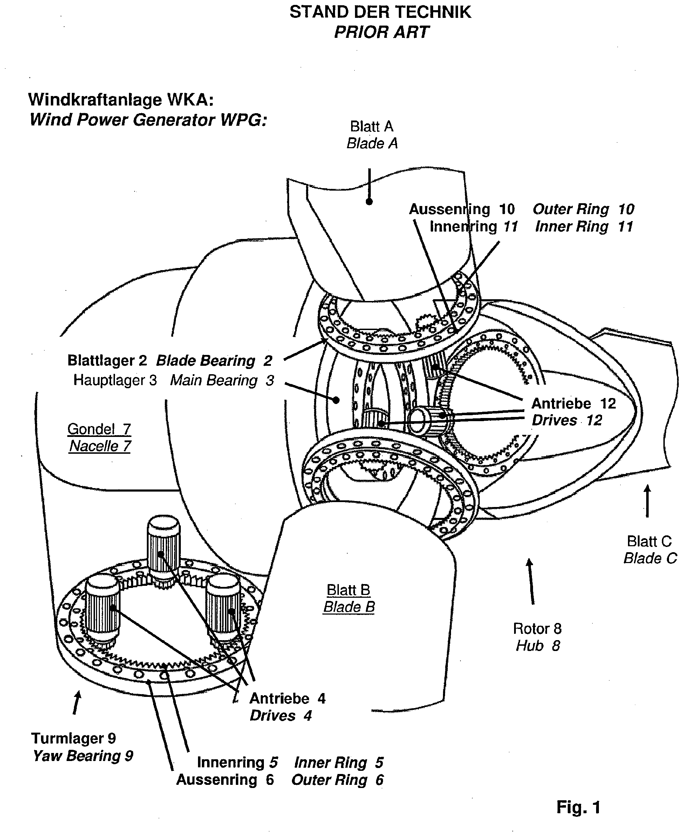

Besonderes Augenmerk solch moderne WKA/WPG verdienen dabei die letztgenannten Antriebsmechanismen, welche das Verstellen der Blätter, das sogenannte Pitching, sowie auch das Verstellen des Turmkopfes, realisieren. Die Zeichnung Fig. 1 zeigt beispielhaft die Positionierung solcher Antriebe 12 für die Blattverstellung und auch solcher Antriebe 4 für die Turmverstellung.

Auch die EP 11007567 offenbart eine Baugruppe zum Verstellen eines Blattes einer Windenergieanlage, insbesondere für Windenergieanlagen mit einer Leistung von insgesamt weniger als 250 kW, im Besonderen sogar für Leistungen von weniger als 200 kW, welche die aktive und individuelle Verstellung je eines Blattes ermöglicht. Dabei ist jede solche Vorrichtung als kompakte und einbaufertige Baugruppe ausgestaltet welche an den Schaft des Blattes, zwischen Nabe und Blatt, angebracht werden kann, wobei jedes Blatt durch eine separate Verstellmechanik im Inneren der Baugruppe aktiv und unabhängig von der jeweiligen Verstellung der anderen vorhandenen Blätter verstellt werden kann. Insbesondere aus Zeichnung Fig. 2 der EP 11007567 lässt sich erkennen, dass das Antriebsaggregat 3 dabei prinzipiell mit einem Ritzel 4 in Richtung der Baugruppe 1 positioniert ist und an diese angeschraubt werden kann.

Aus der US 2011/0142618 A1 (Fig. 2) geht ferner hervor, dass ein solches Aggregat 131 dabei in gleicher Richtung wie die Rotationsachse 128 des zu verstellenden Blattes orientiert ist. Auch die Zeichnung (Fig. 3) der EP 1959129 A2 offenbart ein derartig orientiertes Pitchantriebs-Aggregat 32. Aus dem bisher bekannten Stand der Technik lässt sich unter Betrachtung der Zeichnung Fig. 2 der US 2011/0142618 A1 darüber hinaus entnehmen, dass für die Drehverstellung des Turmes 102 einer Windkraftanlage 100 um die Turmachse 116 in der Regel ähnlich aufgebaute und angebrachte Aggregate verwendet werden wir für die Pitchverstellung:

In der Tat sind vorgenannte Pitchantriebs-Aggregate, gleichbedeutend mit Aggregaten zur Drehverstellung sowohl des Blattes einer Windkraftanlage, als auch solche Aggregate zur Drehverstellung des Turmes einer solchen Windkraftanlage bezogen auf deren Durchmesser zwar relativ kompakt, jedoch nicht kompakt in Bezug auf deren Längserstreckung. Dies ist in der Regel dem komplexen Aufbau dieser Aggregate, bestehend aus einem Antriebsteil und einem axial daran angeschlossenen Getriebe mit integrierter Anschlusselektronik geschuldet. Die vorbenannte US 2011/0142618 A1 zeigt in Fig. 2 beispielsweise, dass der Turmantrieb 146 sehr weit in den Innenraum der Gondel bzw. des Maschinenhauses hineinragt. Das verwendete Antriebsaggregat ist wenig bauraumfreundlich, d.h. es baut axial langgestreckt auf. Auf solche Antriebe spezialisierte Industriehersteller fertigen beispielsweise sowohl Antriebsaggregate für die Turmverstellung, als auch derartige Pitchantriebs-Aggregate, nach dem gleichen Prinzip, vgl. [BONF2013]. Ein derartiges Antriebsaggregat für die Turmverstellung weist zwar hohe Antriebsdrehmomente auf, jedoch eine Baulänge, die bis zu etwa einem Fünffachen der Größe des Antriebsritzels entspricht.

Diese Baulänge wirkt sich negativ auf hinsichtlich des in der Gondel bzw. in dem Maschinenhaus verbleibenden Platzes bzw. Bauraumes aus: Eine sinnvolle Möglichkeit, den Turmantrieb im Inneren der Gondel bzw. des Maschinenhauses platzsparender anzubringen ist aufgrund der großen Längserstreckung dieses Aggregats in der Regel nicht möglich ; das Aggregat beispielsweise in technisch sinnvoller Weise an der Außenseite der Gondel oder des Turms anzubringen wird ebenfalls in der Technik nicht praktiziert.

In den Entwicklungsbestrebungen des Maschinen- und Anlagenbaus und der Fahrzeugtechnik, insbesondere auch in der Windenergiebranche, herrscht aufgrund betriebswirtschaftlicher Trends ein permanentes Strebens nach technischen Lösungen mit geringeren Materialkosten und insbesondere nach kompakteren/geringeren Abmessungen der Vorrichtungen vor. Dies trifft auch auf vorbenannte Antriebsaggregate zum Drehverstellen eines Turmes und/ oder eines Blattes einer Windkraftanlage zu, da der Kostendruck in dieser Branche international stark zugenommen hat.

Die heute im Markt befindlichen Antriebsaggregate, beispielsweise in oder an Maschinenteilen oder in/an auf Fahrzeugen, insbesondere aber auch zur Blattverstellung und/oder Turmverstellung in/an Windkraftanlagen, sind darüber hinaus häufig anfällig für Defekte, da das interne Getriebe solcher Aggregate aus vielen Einzelteilen und/oder aus einer komplexen Getriebezusammenschaltung besteht. Dabei ist es gerade für Windkraftanlagen, welche in Ausprägung großer Windkraftanlagen-Parks häufig in unzugänglichen Regionen oder sogar mit zunehmender Tendenz auf dem offenen Meer (,Offshore') errichtet werden, sehr wichtig, Antriebsaggregate mit einer robusten und wenig störanfälligen Getriebekulisse auszustatten, da diese viele Jahre lange ununterbrochen laufen müssen und dabei möglichst wenig Wartungsunterbrechungen benötigen sollen.

Der vorgenannte Stand der Technik offenbart Verbesserungspotenzial hinsichtlich der Robustheit und Kompaktheit der bisherigen Verstellvorrichtungen zum Antreiben oder Drehverstellen, beispielsweise eines Turmlagers 9 oder eines Blattlagers 2 einer Windkraftanlage WKA ; WPG, vgl. Zeichnung Fig. 1.

US2012/073890 offenbart die Merkmale des Oberbegriffes des Anspruchs 1.

Aufgabe der Erfindung und Beschreibung:
Auf dieser Basis des vorgenannt beschriebenen Verbesserungspotenziales ergibt sich die die nachfolgend beschriebene Erfindung initiierende Aufgabe, eine robuste und wenig defekt- oder störanfällige Antriebs- oder Verstellvorrichtung zu schaffen, welche den modernen Anforderungen nach geringerem bzw. engem Bauraum und somit nach möglichst kompakter Ausführung Rechnung trägt und darüber hinaus eine möglichst universelle Einsetzbarkeit beim Antreiben oder zum Drehverstellen mindestens eines verzahnten Lagerringes in oder an einer Anlage, vorzugsweise einer Windkraftanlage, aber auch oder in/an oder auf einem Fahrzeug, ermöglicht.

Die Lösung dieses Problems oder dieser Aufgabe gelingt dann, wenn eine Vorrichtung entsprechend der nachfolgend vorgestellten Erfindung verwendet wird.

Die praxistauglichste Lösung gelingt, indem die Erfindung als ein Momentenlager ausgestaltet ist, welches eine oder mehrere Wälzlagerreihen umfasst und insbesondere zur gleichzeitigen Aufnahme von Axial-, und/oder Radial-Kräften und/oder von Kippmomenten geeignet ist. Dabei umfasst die Erfindung wenigstens ein etwa ringförmiges Gehäuseteil, beispielsweise einen inneren Ring, welches/r angetrieben wird oder antreibbar ist durch eine oder mehrere Schneckenwellen, wobei das angetriebene oder antreibbare Gehäuseteil gekoppelt ist oder koppelbar ist oder gar einstückig ausgebildet ist mit einem oder mehreren Ritzel/n. Ferner beinhalten die Wälzkörperreihe(n) des Momentenlagers zylinderrollenförmige oder kugelförmige oder kegelförmige oder tonnenförmige Wälzkörper oder gar ringförmige Gleitkörper. Es ist auch denkbar und löst ebenso die o.g. Aufgaben, wenn das Momentenlager als Gleitlagerung unter Entbehrung jeglicher Wälzkörperreihe(n) ausgestaltet ist. Gegebenenfalls sind vorgenannte Gleit- und/oder Wälzkörper so in deren Laufbahnen bzw. Wälzkörperreihen eingelegt, dass sie gegen oder auf eingelegte(n) Laufbahnringe(n) abrollen oder entlang gleiten. Für die Montage dieser (eingelegten) Ringe hat es sich als vorteilhaft erwiesen, wenn diese einen, beispielsweise zwecks Toleranzausgleich aufweitbaren oder zusammenpressbaren Schlitz aufweisen.

Die Erfindung kann demnach in Form einer Vorrichtung als Momentenlager zum Antreiben oder zum Drehverstellen mindestens eines verzahnten Ringes fungieren, und zwar unter Eingriff mindestens eines der Vorrichtung zugehörigen oder daran ankoppelbaren Ritzels/Zahnrads. Alternativ verfügt die Erfindung über wenigstens eine zusätzliche mit diesem Ritzel/ Zahnrad kämmende Zahnradgetriebestufe, vorzugsweise zum Antreiben oder zum Drehverstellen wenigstens eines Ringes eines Turmlagers alteroder zum Antreiben oder zum Drehverstellen wenigstens eines Ringes eines Blattlagers, so wie es beispielsweise in oder an einer Anlage, vorzugsweise einer Windkraftanlage, vorgesehen werden kann.

Alternativ zur Verwendung der Erfindung auf einer stationären Anlage kann selbige auch an/auf einem Fahrzeug oder an/auf einem Maschinenteil platziert oder montiert werden - wobei sich das Anschrauben als die praxistauglichste Montagemöglichkeit erwiesen hat - und wobei die Vorrichtung wenigstens je eine Wälzkörperreihe beherbergt, welche zwischen zwei oder mehr als zwei gegeneinander verdrehbaren und zueinander konzentrisch angeordneten Gehäuseteilen oder Ringen derselben Vorrichtung angeordnet ist.

In jedweder Form ist die Erfindung in Form einer Vorrichtung als Momentenlager dadurch gekennzeichnet, dass mindestens ein Befestigungskörper gegeben ist welcher mit dem Ritzel/ Zahnrad entweder einstückig verbunden ist oder damit, idealerweise mehrteilig, koppelbar ist. Dieser Befestigungskörper kann schlichtweg als Metallring mit kranzförmig darauf verteilten Bohrungen ausgeführt sein, oder aber als Flansch mit an-schraubbarem/n Ritzel und/oder anschraubbarer/n Anschlusskonstruktion/en.

Als besonders vorteilhaft im Sinne der technischen Lehre der Erfindung hat es sich erwiesen, wenn eines der zur Erfindung zugehörigen Gehäuseteile an einem ersten, beispielsweise ringförmigen, Befestigungskörper anlegbar ist. Praktischerweise erfolgt diese Anlegen mittels mehrerer ringförmig angeordneter Schrauben. Gegebenenfalls jedoch ist das Gehäuseteil sogar einstückig mit dem vorgenannten Befestigungskörper so verbunden, sodass die Schrauben überflüssig sind und gänzlich weggelassen werden können.

Das Zweite der zur Erfindung zugehörigen Gehäuseteile hingegen ist an einem zu dem ersten Befestigungskörper relativ verdrehbaren, beispielsweise konzentrisch geformten, zweiten Befestigungskörper anlegbar.
Auch dies kann beispielsweise mittels mehrerer ring- oder kranzförmig angeordneter Schrauben erfolgen. Alternativ kann auch hier das zweite Gehäuseteil und der soeben genannte zweite Befestigungskörper einstückig ausgebildet sein und die Verbundungsschrauben entfallen dann auch in der letztgenannten Version.

In der Praxis bzw. im Gewerbe einsetzbar wird die erfindungsgemäße Vorrichtung vor Allem dadurch, dass daran oder darin mindestens eine Anschlussmöglichkeit für einen anschließbaren Motor, beispielsweise einen Elektromotor oder einen Hydraulikmotor, vorhanden ist, wobei ein solcher Motor mit je einer verzahnte Welle, welche im Inneren der erfindungsgemäßen Vorrichtung liegt, mechanisch koppelbar ist. Sinn und Zweck eines jenen Motors ist es, diese innen liegende Welle um ihre Mitten- oder Drehachse rotatorisch anzutreiben.

In einer weiterentwickelten Ausführungsform sind Motor und Welle ein- und dasselbe Bauteil, welches "als Ganzes" in den Wellentunnel eingeführt werden kann.

Vorteilhaft für die erfindungsgemäße Vorrichtung ist ferner, wenn das Ritzel/Zahnrad, welches die Antriebsenergie auf einen oder mehrere verzahnte Ringe überträgt, entlang seines Außendurchmessers und/oder eingebracht an dessen Innendurchmesser, beispielsweise eine Verzahnung nach DIN 780 aufweist. Diese Verzahnung ist beispielsweise im Radialschnitt des Ritzels/Zahnrads sternartig ausgeprägt.

Die vorgenannte Welle im Inneren der Welle ist ursächlich für die Antriebsenergie, mit der das oder die vorgenannte/n Ritzel der Vorrichtung beaufschlagt wird/werden:
Im Sinne der Erfindung wird diese Welle nämlich über den vorgenannten Motor bspws. elektrisch oder hydraulisch angetrieben und versetzt die Welle in Drehbewegung. Da diese Welle in der Regel verzahnt ausgeführt ist, wird die Antriebsenergie bzw. das Drehmoment des vorgenannten Motors in einem Eingriffsbereich, der zwischen dem ersten Gehäuseteil und wenigstens einem zweiten Gehäuseteil angeordnet ist, übertragen. Die Welle kämmt dann mit jener Verzahnung, welche in dem (zweiten) Gehäuseteil der erfindungsgemäßen Vorrichtung eingearbeitet ist.

Es hat sich als praxisnah erwiesen, wenn des Ritzels Verzahnung im Eingriff ist oder kämmt über wenigstens eine weitere Getriebestufe mit mindestens einem anzutreibenden innen verzahnten Innenring oder mit wenigstens einem anzutreibenden außen verzahnten Außenring.

Gemäß der Lehre der Erfindung sind die vorgenannten Ringe (d.h. innenverzahnter Innenring und/oder außenverzahnter Außenring) entweder Teil einer stationären Anlage, beispielsweise der Windenergieanlage, oder alternativ Teil einer mobilen Anlage, beispielsweise eines Fahrzeuges odereines beweglichen/bewegbaren Maschinenteils. Es entspricht weiter der Lehre der Erfindung, wenn neben dem vorgenannten Motor mindestens eine Anschlussmöglichkeit für ein anschließbares Hemmungsglied oder für eine anschließbare mechanische Bremse vorhanden ist, wobei letztgenannte beispielsweise als eine Art Permanentbremse ausgestaltet sein kann, und wobei vorzugsweise das Hemmungsglied oder die Bremse in Richtung der Mitten- oder Drehachse der Welle angeordnet wird.

Um den in der Praxis auftretenden Lastfällen der rückwirkenden Belastungsmomente Rechnung zu tragen, verfügt idealerweise die Erfindung zusätzlich über eine Einrichtung, welche etwaige vom Ritzel auf die innen liegende Welle rückwirkende Drehmomente mindert oder begrenzt, insbesondere um mechanisch wirkende Überlast auf Ritzel und/oder Welle und/oder Gehäuseteil(e) bzw. Befestigungskörper zu mindern oder zu begrenzen.

Eine solche Einrichtung ist vorzugsweise im Sinne der Erfindung konzentrisch um die Ringachse und/oder zwischen Ritzel angeordnet und wenigstens an einem Gehäuseteil und/oder Befestigungskörper mechanisch kraftschlüssig an- oder eingebracht.

In einer signifikanten Anzahl an Praxisfällen dient diese Einrichtung sobei als Überdrehmomentschutz, vorzugsweise sogar als Rutschkupplung, welche/r bei betragsmäßig hohem Drehmoment M_{d} max, welches um die Ringachse auftritt, den mechanischen Kraftschluss zwischen Ritzel und Gehäuseteil bzw. Befestigungskörper freilaufen lässt und somit eine etwaig mechanisch wirkende Überlast auf Ritzel und/oder Welle und/oder Gehäuseteil(e) bzw. Befestigungskörper "abkuppelt". Ein solcher mechanischer "Freilauf" der Einrichtung, beispielsweise der Rutschkupplung, kann bereits ab einem Moment von M_{d} = 1.000 Nm beginnen, gegebenenfalls jedoch erst bei Momenten von z.T. weit über M_{d} = 3.000 Nm.

Im beispielhaften Sinne kann die vorgenannte Überlast- oder Schutzeinrichtung zumindest zwei oder mehr Kupplungsplatten aufweisen, welche jeweils kraftschlüssig kuppelnde Elemente umfassen, insbesondere welche im kraftschlüssigen Zustand gegeneinander gepresst werden und dadurch Reibschluss erzeugen, beispielsweise axial gegeneinander gepresst werden oder paarweise ineinandergreifen.
Bezüglich Material bzw. den Werkstoffen der Erfindung hat sich folgende Auswahl als vorteilhaft erwiesen:
Befestigungskörper und zugehöriges oder damit verbindbares Ritzel/Zahnrad (21) und/oder wenigstens eines der Gehäuseteile können einstückig aus Gusswerkstoff gefertigt sein oder daraus bestehen, vorzugsweise aus Grauguss oder Stahlguss oder Nichteisenmetallguss (wie etwa Kupfer-, Blei-, Zinn-, Zink- oder gar Nickel-Gusslegierung), oder sogar aus Leichtmetallguss.

Bezüglich Montage oder Montierbarkeit der Erfindung hat es sich hingegen als vorteilhaft erwiesen, wenn zumindest einer der Befestigungskörper - oder praktischerweise gar beide Befestigungskörper - als Befestigungsflansch ausgeführt ist/sind, welche/r von mehreren jeweils parallel zur Ringachse orientierten und als Vorsehung für Schrauben dienenden Bohrungen durchsetzt ist. Somit ist die einfache und insbesondere wiederlösbare Montage oder Montierbarkeit an oder auf der stationären oder mobilen Anwendung gewährleistet. Der erste Befestigungskörper oder das Gehäuseteil verfügt beispielsweise und praktischerweise also über eines oder mehrere (Verbindungs-)Mittel, beispielsweise ausgeführt als ringförmige/r Schraubenkreis/e, zwecks Befestigung an wenigstens einem nicht zur Vorrichtung gehörigen Teil.

Die Geometrie der Vorrichtung bzw. des Momentenlagers ist vorteilhafterweise so ausgestaltet, dass der Betrag des Außendurchmessers des ersten Gehäuseteils im Stoß- oder Verbindungsbereich zum anschließenden Befestigungskörpers dem Betrag des Außendurchmessers des Befestigungskörpers mindestens oder nahezu entspricht und/oder wenn der zweite Befestigungskörper mittenfrei oder zumindest im seinem Innendurchmesser hohlzylindrisch ausgeführt ist.

Durch diese Wahl der Geometrieausgestaltung ist es einfach möglich, etwaige Versorgungsleitungen, bspws. zur Bestromung der vorgenannten Motoren oder zur Kabelduchführung für die weitere/benachbarte Anschlusskonstruktion/en, durch die Mitte der Vorrichtung bzw. des Momentenlagers laufen zu lassen, ohne dass die Verdrehfähigkeit oder Anwendbarkeit der Erfindung negativ beeinträchtigt wird.

Selbstverständlich ist die vorliegende Erfindung auch in rauer Atmosphäre oder in Freiluftanwendungen einsetzbar. Um die Erfindung und insbesondere die innen liegenden, kräfte- und momentenübertragenden, Teile vor der Außenumgebung zu schützen sieht die Erfindung mehrere Abdichtungsmöglichkeiten vor:
Da im Sinne der Erfindung zwischen erstem Gehäuseteil und zweitem Gehäuseteil wenigstens ein mechanischer Spalt gegeben ist, sind/ist jene/r mittels einem oder mehreren elastischen Dichtungsring(en) gegen die Umgebung abgedichtet, wobei diese/r elastische/n Dichtungsring/e vorzugsweise aus gummiartigem oder kautschukartigem Material bestehen. Dem vorgenannten folgend, ist erfindungsgemäß zwischen zweitem Gehäuseteil und/oder einem zweiten Befestigungskörper und/oder einem ersten Befestigungskörper ein mechanischer Spalt gegeben, welcher mittels einem oder mehreren elastischen Dichtungsring(e) (vorzugsweise bestehend aus gummiartigem oder kautschukartigem Material, direkt oder indirekt abgedichtet ist.

In einem äußerst bevorzugten Anwendungsgebiet der Erfindung ist eine Windkraftanlage oder ein (stationäres) Maschinenteil oder eine stationäre Anlage mit wenigstens einem Stück der vorgenanten Erfindung ausgestaltet.

Diese Bestückung ist erfindungsgemäß, wenn das Anwendungsgebiet mindestens eine um eine Rotationsachse drehbare/schwenkbare Baugruppe/Plattform und aufweist, sodass eine oder mehrere erfindungsgemäße Vorrichtungen über je ein angekoppeltes oder ankoppelbares Ritzel/Zahnrad wenigstens einen innenverzahnten Innenring, alternativ wenigstens einen außenverzahnten Außenring, antreiben oder Drehverstellen oder mit diesem kämmen. Dies ist vorzugsweise bei einer Windkraftanlage gegeben, welche stets zumindest über eine drehbare "Kopfpartie", genannt: Gondel oder Maschinenhaus, verfügt. Andere stationäre Anlagen, beispielsweise Satellitenanlagen(türme) mit drehbaren Plattformen od. dgl., verfügen ebenfalls über eine solche drehbare "Kopfpartie" und liegen damit im Zielanwendungsgebiet der Erfindung.

Nicht nur stationäre Anwendungsgebiete können jedoch mit der vorliegenden Erfindung ausgestattet sein. Auch die Verwendung der Vorrichtung bzw. des Momentenlagers auf einem Fahrzeug, beispielsweise einem Schwerlastfahrzeug oder einem Kranfahrzeug oder einem Baufahrzeug bringt Vorteile, wenn zumindest eine um eine Rotationsachse drehbare/schwenkbare Baugruppe, beispielsweise eine drehbare/schwenkbare Kran- oder Turm- oder Lafetten- oder Hubarmbaugruppe wenigstens eine Vorrichtung als Momentenlager zum Antreiben oder zum Drehverstellen wenigstens eines Lagerringes aufweist, sodass diese wenigstens eine erfindungsgemäße-Vorrichtung über je ein angekoppeltes oder ankoppelbares Ritzel/Zahnrad wenigstens einen innenverzahnten Innenring, alternativ wenigstens einen außenverzahnten Außenring, antreiben oder drehverstellen oder mit diesen/m kämmen kann.

Höheres Antriebsmoment auf den zu verstellenden Ring kann dann erreicht werden, wenn mehrere erfindungsgemäße Vorrichtungen vorteilhaft um denselben anzutreibenden Ring angeordnet werden, beispielsweise so, dass eine, zwei, drei, vier oder gar mehr als vier gleichartige Vorrichtungen nach der Lehre der Erfindung über wenigstens je ein angekoppeltes oder ankoppelbares Ritzel/Zahnrad in einem, vorzugsweise gleichmäßigen, Winkelabstand zueinander gleichzeitig in die Verzahnung eines oder mehrerer Ringe eingreifen.

Eingangs wurde das Anwendungsgebiet der Windkraft bezeichnet. Die Vorteile der vorliegenden Erfindung treten in diesem Sinne dann zu Tage, wenn mindestens ein zu einer solchen Windkraftanlage gehöriges Lager als Blattlager ausgeführt ist, welches durch wenigstens einen Innenring und wenigstens einen Außenring gebildet ist und wenigstens eine an mindestens einen dieser Ringe angekoppelte Vorrichtung aufweist, die dazu dient einen der Blattlagerringe gegen einen zweiten Blattlagerring zu verdrehen. Aber auch zum Antrieb eines Turmlagers einer Windkraftanlage kann die Erfindung ohne größere mechanische Anpassungen problemlos eingesetzt werden.

Naheliegende Ausgestaltungen und Weiterentwicklungen der Erfindung liegen ebenso im Sinne der technischen Lehre wie die nachfolgend beschriebenen Beispielsanwendungen. Hierbei zeigen:
Fig. 1 den bisherigen Stand der Technik zur Verstellung von (Lager-)Ringen, beispielhaft bezogen auf eine Windkraftanlage.
Fig. 2 eine beispielhafte Version der Erfindung in perspektivischer Ansicht.
Fig. 3 einen Dreiviertelschnitt der Erfindung aus Fig. 2.
Fig. 4 einen Dreiviertelschnitt der Erfindung aus Fig. 2.
Fig. 4a eine Draufsicht auf die Erfindung aus Fig. 2.
Fig. 4b eine Untenansicht der Erfindung aus Fig. 2.
Fig. 5a eine seitliche Ansicht der Erfindung aus Fig. 2.
Fig. 5b eine rückwärtige seitliche Ansicht der Erfindung aus Fig. 2.
Fig. 6a ein Anwendungsgebiet der Erfindung, wobei schematisch angedeutet ist wie der Ritzelteil (21) der Erfindung mit einem verzahnten Innenring kämmt.
Fig. 6b ein weiteres Anwendungsgebiet der Erfindung, wobei schematisch angedeutet ist wie die Ritzelteile (21) von zwei nahezu nebeneinander angeordneten Erfindungen mit einem verzahnten Außenring kämmt.
Fig. 6c ein weiteres Anwendungsgebiet der Erfindung, wobei schematisch angedeutet ist wie die Ritzelteile (21) von zwei alternativ angeordneten Erfindungen mit einem verzahnten Innenring, als auch mit einem verzahnten Außenring, kämmt.
Fig. 6d ein weiteres Anwendungsgebiet der Erfindung, wobei schematisch angedeutet ist wie die Ritzelteile (21) von vier jeweils an den Eckpunkten einer Ringanordnung angeordneten Erfindungen zugleich mit einem verzahnten Außenring, kämmen.
Fig. 7 einen Teilausschnitt der Erfindung aus Fig. 2.
Fig. 8a ein weiteres Anwendungsgebiet der Erfindung, wobei schematisch angedeutet ist wie mehrere Erfindungen (1) mit dem Außenring eines Turmlagers kämmen, um eine verdrehbare Plattform (110) um die Rotationsachse (R1) des Turmes (100) zu drehverstellen.
Fig. 8b den linksseitigen Teilausschnitt der Anwendung aus Fig. 8b.
Fig. 8c den rechtsseitigen Teilausschnitt der Anwendung aus Fig. 8b.
Fig. 9a einen Dreiviertelschnitt der Erfindung aus Fig. 2, wobei schematisch angedeutet ist die Positionierung einer Überlasteinrichtung (OS).

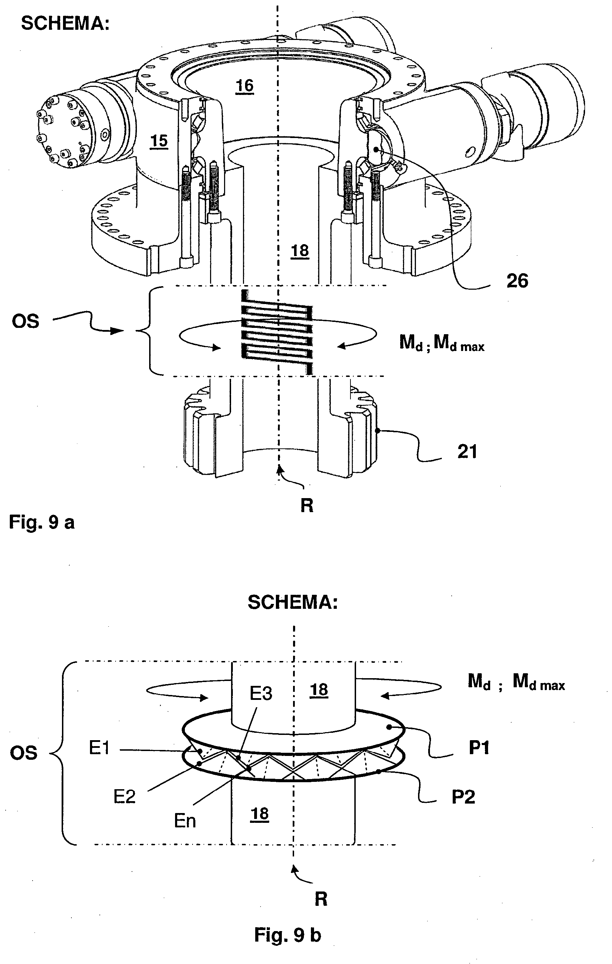

Fig. 9a ein beispiel einer Überlasteinrichtung (OS) aus Fig. 9a.

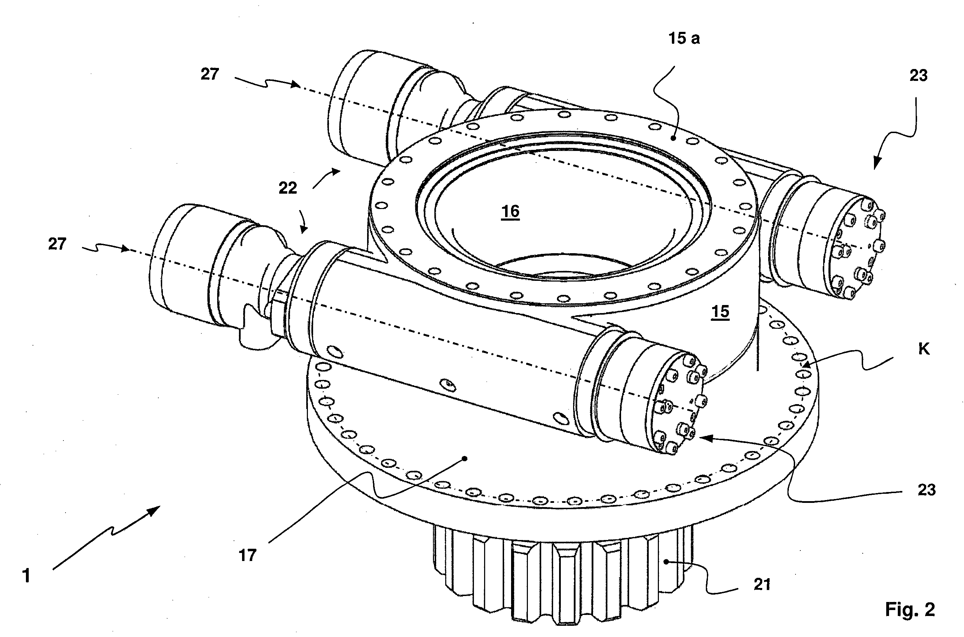

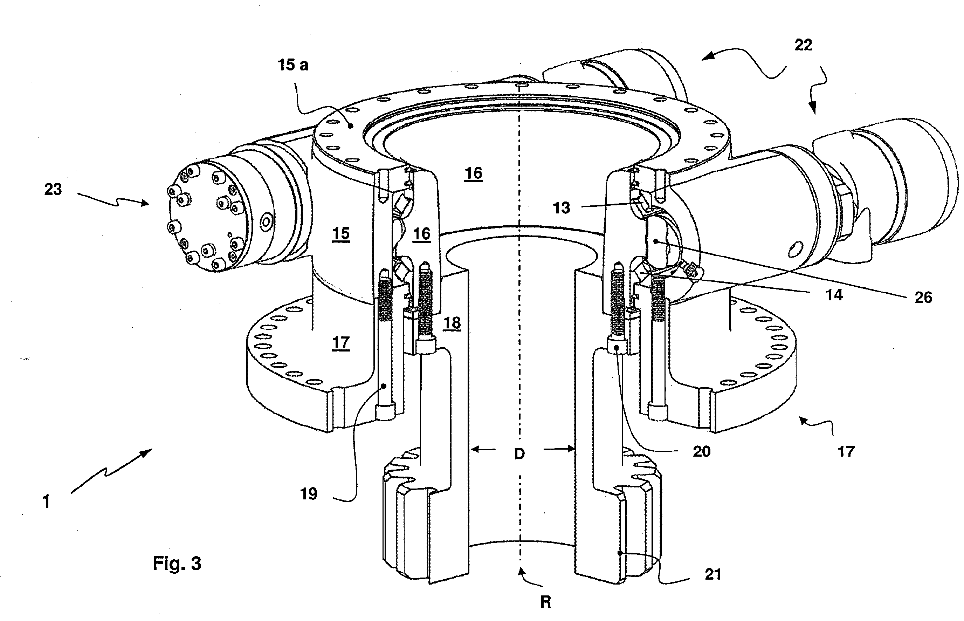

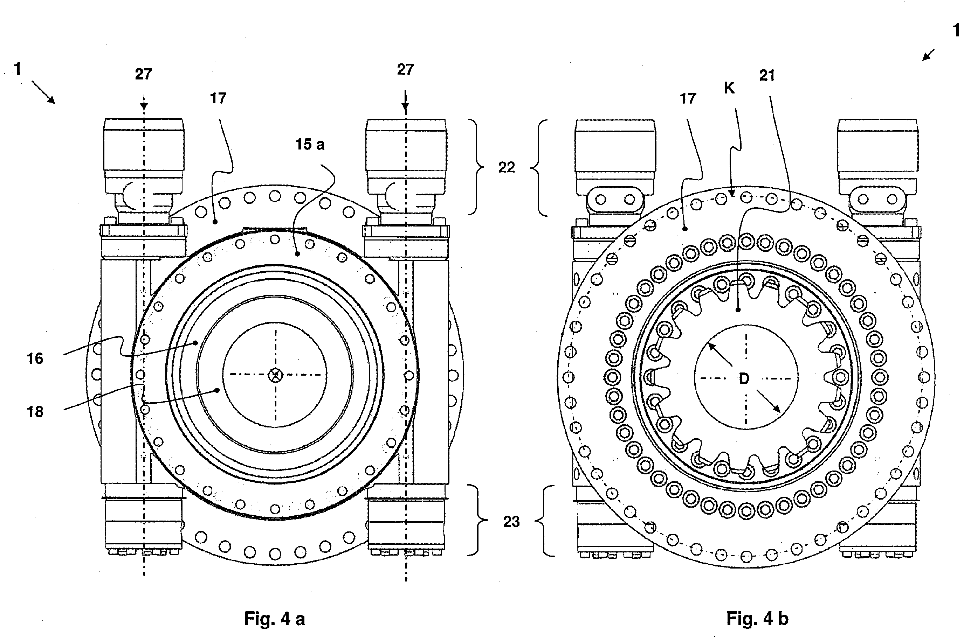

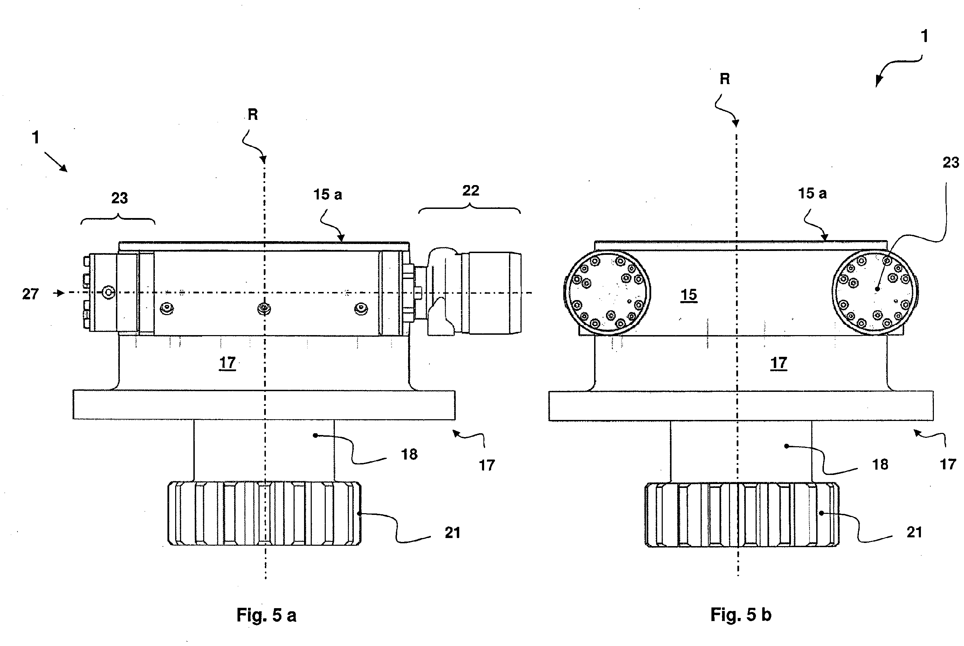

In den Zeichnungen Fig. 2 und Fig. 3 sind erfindungsgemäße Momentenlager bzw. Vorrichtungen in beispielhaft angeschlossener Weise dargestellt, sowie auch in den nachfolgenden Zeichnungen Fig. 4a, Fig. 4b und Fig. 5a, Fig. 5 b.
Das vorbenannte Ritzel/Zahnrad 21 weist, um die Antriebsaufgabe zu erfüllen, dabei idealerweise entlang seines Außendurchmessers, alternativ eingebracht an dessen Innendurchmesser, eine Verzahnung auf. Es hat sich als praxisnah erwiesen, dass diese Verzahnung ein konstantes Moduls nach DIN 780 aufweist.

Die Zeichnung Fig. 4a zeigt die Draufsicht auf eine beispielhaft ausgeprägte Vorrichtung 1, während Fig. 4b beispielhaft ein Ritzel 21 in Stirnansicht offenbart. Fig. 4b ist die Untenansicht der Fig. 4a. Das Ritzel/ Zahnrad 21 ist demnach beispielsweise in dessen Radialschnittebene sternartig ausgeprägt und weist vorzugsweise einen Modul m auf, der dem mathematischen Quotienten aus Teilung und Kreiszahl entspricht: m = p / π.

Vorteilhaft und im Sinne der Erfindung ist ferner, dass die Vorrichtung 1 eine oder mehrere verzahnte Wellen 26 beherbergt, wobei diese verzahnte Welle 26 jeweils zwischen dem ersten Gehäuseteil 15 und wenigstens einem zweiten Gehäuseteil 16 angeordnet ist und gleichzeitig mit einer in dieses zweite Gehäuseteil 16 eingebrachten oder mit einer in dieses zweite Gehäuseteil 16 eingearbeiteten Verzahnung kämmt. Auf diese Weise ist es möglich, das Antriebsmoment des angeschlossenen Motors über die Welle 26 auf den inneren Teil 16 der Vorrichtung 1 zu übertragen.

Konsequent der vorbenannten Übertragung folgend wird ergo bei einer Momentenübertragung auf die Welle 26 das Gehäuseteil 16 in Drehung versetzt. Dadurch, dass der mit diesem Gehäuseteil 16 verbundene Befestigungskörper 18 verdrehfest an diesem Gehäuseteil platziert ist, wird das Moment folglich auf das Ritzel 21 übertragen. Jenes Ritzels/Zahnrad 21 oder dessen Verzahnung ist im Sinne der Erfindung im Eingriff oder kämmt mit mindestens einem innen verzahnten Innenring 5 ; 11 oder mit wenigstens einem außen verzahnten Außenring 6 ; 10.
Dieser innen verzahnten Innenring 5 ; 11 oder der außen verzahnte Außenring 6 ; 10 ist nicht Teil der Vorrichtung 1, sonder Teil der Anlage 100 oder Windkraftanlage WKA ; WPG, oder Verbindungsteil einer daran angeschlossenen Baugruppe/Plattfom 110, oder sogar ein Teil in/an/auf einem Fahrzeug.

Insbesondere anhand der Zeichnungen Fig. 2 , Fig. 3, Fig. 4a, Fig. 4b, Fig. 5a und Fig. 5b wird beispielhaft offenbart, dass die erfindungsgemäße Vorrichtung 1 nicht nur über Anschlussmöglichkeiten 22 für Antriebe verfügt, sondern zusätzlich mindestens eine Anschlussmöglichkeit 23 für ein anschließbares Hemmungsglied oder für eine anschließbare mechanische Bremse, beispielsweise eine Permanentbremse, aufweisen kann:

Es hat sich als vorteilhaft erwiesen wenn jenes das Hemmungsglied oder die Bremse in Richtung der Mitten- oder Drehachse 27 der vorbenannten Welle 26 angeordnet wird, jedoch von dieser Welle 26 axial beabstandet ist und auf der gegenüberliegenden Seite der Anschlussmöglichkeit 22 für einen anschließbaren Motor an das erste Gehäuseteil 15 angelegt ist. Dadurch bleibt die Kompaktheit der Vorrichtung 1 gewahrt, während gleichzeitig Bremse und Antrieb in ein- und derselben Wirkachse 27 betrieben werden können.

Es ist in einem positiven Sinne hinsichtlich der Serienfertigbarkeit der Vorrichtung 1, wenn der Befestigungskörper 18 der Vorrichtung 1 und das damit zugehörige oder damit verbindbare Ritzel/Zahnrad 21 sowie wenigstens eines der Gehäuseteile 15 ; 16 einstückig aus Gusswerkstoff hergestellt sind, vorzugsweise aus Grauguss oder Stahlguss. Besondere Gewichtsersparnisse bringt die Herstellung der vorbenannten Teile aus einem Nichteisenmetallguss wie etwa aus einer Kupfer-, Blei-, Zinn-, Zink- oder gar Nickel- Gusslegierung, oder sogar aus Leichtmetallguss.

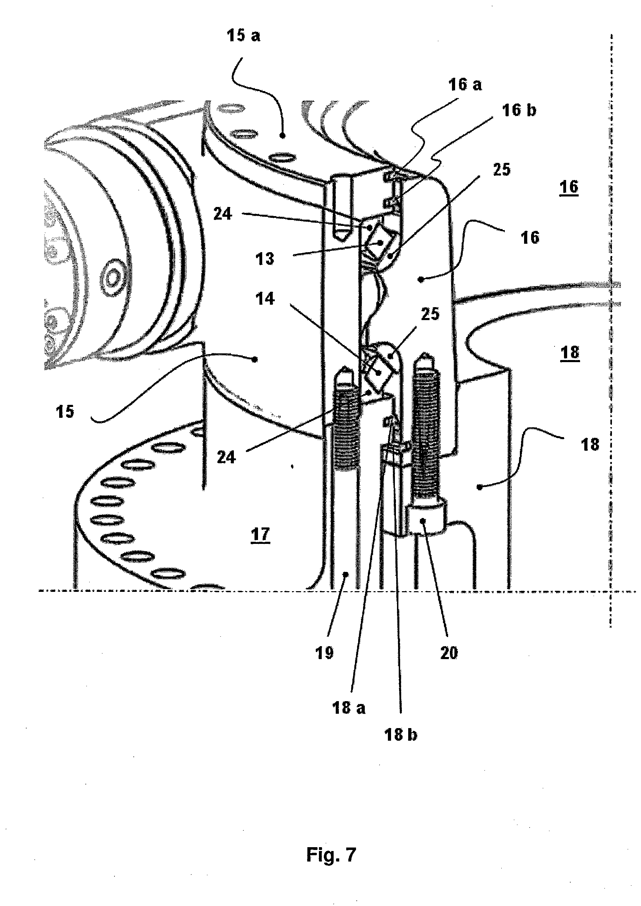

Besonders vorteilhaft und praktikabel ist die Vorrichtung, wenn zumindest einer der Befestigungskörper 17 ; 18, idealerweise sogar beide Befestigungskörper, als Befestigungsflansch ausgeführt ist/ sind, welche/r von mehreren jeweils parallel zur Ringachse R orientierten und als Vorsehung für Schrauben 19 ; 20 dienenden Bohrungen durchsetzt ist. Wie Fig. 3 und Fig. 7 zeigen, lässt sich dadurch eine einfache Montage des Befestigungskörpers 18 an dem zweiten Gehäuseteil 16, sowie eine einfache Montage des Befestigungskörpers 17 an dem ersten Gehäuseteil 15, erreichen. Diese Montage kann entweder vor Ort, also an der Anlage, oder sogar vormontiert bereits im Werk durchgeführt werden.

Einfache Montierbarkeit der Vorrichtung 1 an der Anlage oder Maschine oder am Fahrzeug stellt sich heraus, wenn der Betrag des Außendurchmessers des ersten Gehäuseteils 15 dem Betrag des Außendurchmessers des ersten Befestigungskörpers 17 nahezu entspricht oder mit jenem fluchtet, denn dadurch wird auf Stufenbildung zwischen den Teilen 15 und 17 verzichtet, und die Bohrungen des Schraubenkreises K offengelegt bleiben: Dabei bildet der Schreibenkreis K ein in oder am ersten Befestigungskörper 17 vorgesehenes Mittel zwecks Befestigung der gesamten Vorrichtung 1 an wenigstens einem nicht zur Vorrichtung 1 gehörigen Teil der Maschine oder Anlage oder des Fahrzeugs.

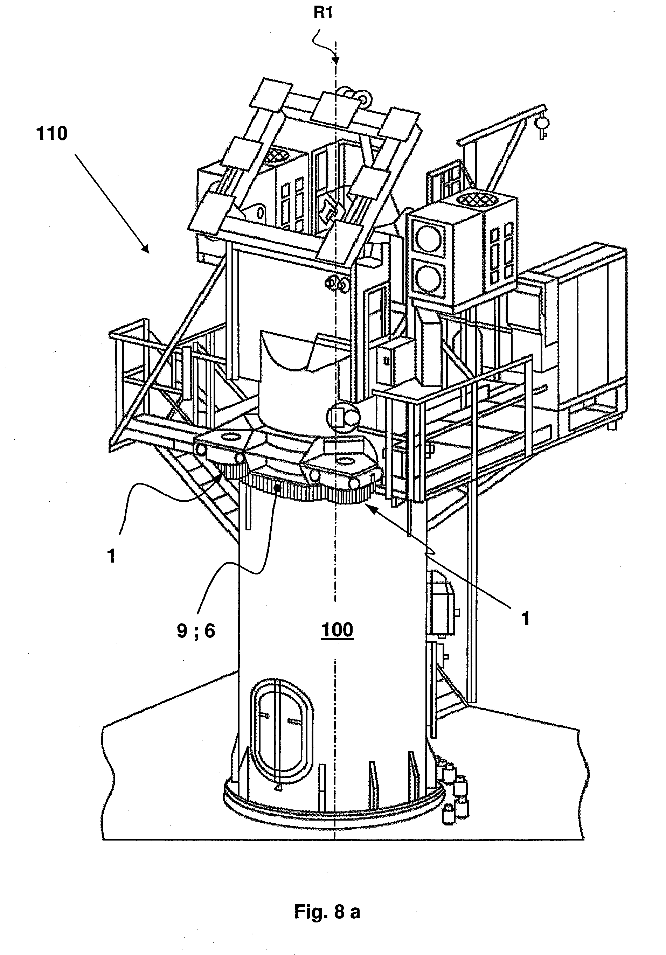

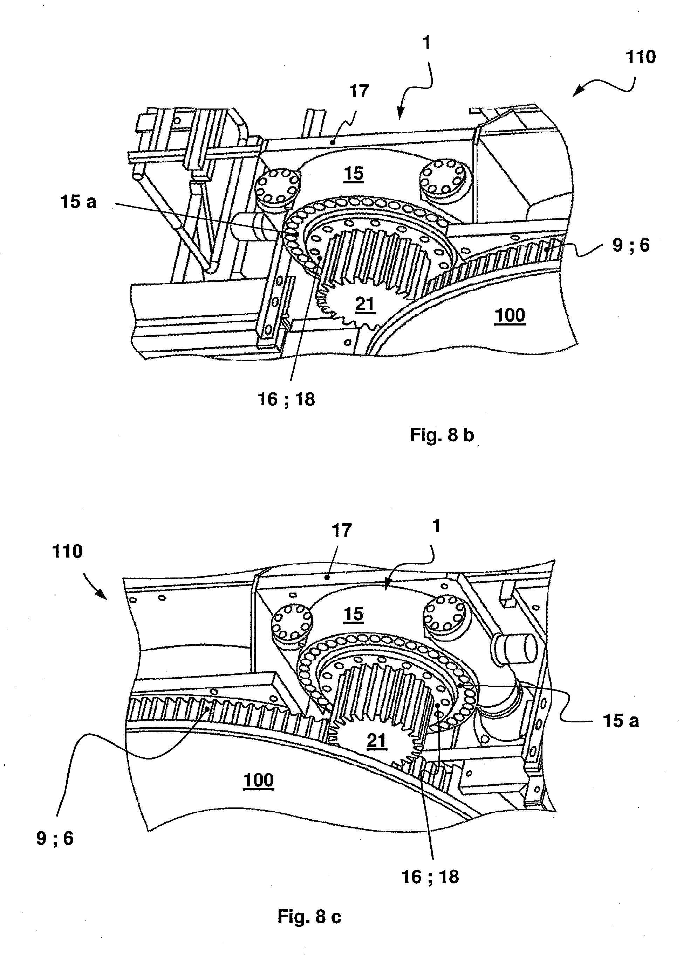

Beispielsweise ist die Vorrichtung 1 mittels K an einem Teil der Windkraftanlage WKA ; WPG oder einer Anlage 100, beispielsweise an deren Maschinenträger oder an einer Baugruppe/Plattform 110, alternativ an der Gondel 7, oder an dem Rotor 8, angebracht. Wie oben beschrieben wurde, zeigen die Zeichnungen Fig. 8a, Fig. 8 b und Fig. 8c auf, dass der Befestigungskörper 17 eine einfache Platte darstellen kann, über diese die Vorrichtung 1 fest an eine Baugruppe oder Plattform 110 angeschraubt ist, während die Verzahnung des Ritzels 21 mit dem Turmlager 9 des Turmes 100 korrespondiert, der die Baugruppe oder Plattform 110 trägt.

Mittenfreiheit der Vorrichtung 1 stellt sich hingegen insbesondere dann heraus, wenn der Betrag des Innendurchmessers des zweiten Gehäuseteils 16 größer oder gleich dem Betrag des Innendurchmessers D des zweiten Befestigungskörpers 18 ist oder mit jenem fluchtet. Mittenfreiheit ist stets dann ein vorteilhaftes Kriterium, wenn elektrische oder hydraulische Leitungen oder Schläuche zur Vorrichtung 1 hinzugeführt werden müssen, beispielsweise zentral entlang oder in Richtung der Ringachse R. In Zeichnung Fig. 3 ist diese vorhandene Mittenfreiheit der Erfindung besonders gut erkennbar.

Um das mechanische Innenleben der Vorrichtung 1 vor widrigen Umwelteinflüssen, oder vor externen Fremdkörpern zu schützen und somit die gewünscht kompakte und robuste Ausführung zu erreichen, hat es sich als vorteilhaft herausgestellt, an dem ersten Gehäuseteil 15 eine ringförmige Gehäusescheibe 15a anzulegen oder aufzuschrauben, welche gegenüber dem zweiten Gehäuseteil 16 nur insofern einen mechanischen Spalt belässt dass dieser mittels einer oder mehrerer elastischer Dichtungsringe 16a ; 16b, vorzugsweise bestehend aus gummiartigem oder kautschukartigem Material, verschlossen werden kann. Der Dichtungsspalt zwischen den beiden Teilen 15 ; 16 ist hingegen unabdingbar, um die Verdrehfähigkeit der Vorrichtung 1 zu erhalten.

Analog zu Vorbenanntem ist ein mechanischer Spalt zwischen zweitem Gehäuseteil 16 und einem ersten Befestigungskörper 17 gegeben, welcher mittels einer oder mehrerer elastischer Dichtungsringe 18a ; 18b, vorzugsweise bestehend aus gummiartigem oder kautschukartigem Material, zumindest weitestgehend verschlossen ist. Die Dichtungen 16a ; 16b ; 18a ; 18b dienen dem Zweck, ein vorzugsweise im Laufbahnsystem der Vorrichtung 1 enthaltenes Schmiermittel (Öl oder Schmierfett) gegen Auslaufen zu hindern und gleichzeitig dienen diese Dichtungen 16a ; 16b ; 18a ; 18b dem Zweck, unerlaubte externe Fremdkörper vor dem Eindringen in die Vorrichtung 1 zu hindern.

In Fig. 3 und Fig. 7 sind diese Dichtungen bezeichnet.

Das Laufbahnsystem der Vorrichtung 1, welches die Verdrehbewegung überhaupt erst ermöglicht, ist sehr wichtiger Bestandteil der Erfindung und vorteilhafterweise wie folgt ausgestaltet:
Mindestens eine, vorzugsweise mehrere, Wälzkörperreihe/n 13 ; 14 läuft oder laufen zumindest einseitig, idealerweise beidseitig, an oder auf einem Laufbahnring 24 ; 25 an, indem sie am jeweiligen einem Laufbahnring 24 ; 25 entlang gleitet/n und/oder daran abrollt/en. Ein solcher Laufbahnring 24 ; 25 ist dabei je zwischen Gehäuseteil 15 ; 16 und Wälzkörperreihe 13 ; 14 im Inneren der Vorrichtung 1 befestigt ist oder eingelegt.

Die Wälzkörperreihe/n 13 ; 14 werden im Sinne der vorliegenden Erfindung durch mehrere benachbarte gleichartige Gleit- und/oder Rollkörper gebildet, beispielsweise durch zylinderrollenförmige oder kugelförmige oder kegelförmige oder tonnenförmige oder gar ringförmige Gleit- und/oder Rollkörper, gegebenenfalls unter Zwischenlagerung mehrerer Distanzstücke oder gar unter Verwendung eines Wälzkörperkäfigs oder gar unter Verwendung mehrerer Käfigsegmente jeweils innerhalb der Wälzkörperreihe 13 ; 14.

Wie vorgenannt, findet die Erfindung vorzugsweise Anwendung in einer Windkraftanlage WKA ; WPG oder einer Anlage 100 des Maschinenbaus, beispielsweise auch einer Satellitenanlage mit drehbarer Turmplattform, welche mindestens eine solche um eine Rotationsachse R1 drehbare/schwenkbare Baugruppe/Plattform 110 aufweist sowie mindestens eine erfindungsgemäße Vorrichtung 1 zum Antreiben oder zum Drehverstellen eines verzahnten Lagerringes 5 ; 6 ; 10 ; 11, beispielsweise des Turmlagers 9, wobei eine oder mehrere Vorrichtungen 1 über je ein angekoppeltes oder ankoppelbares Ritzel/Zahnrad 21 wenigstens einen innen verzahnten Innenring 5 ; 11, alternativ wenigstens einen außen verzahnten Außenring 6 ; 10, antreiben oder Drehverstellen oder mit diesem kämmen.

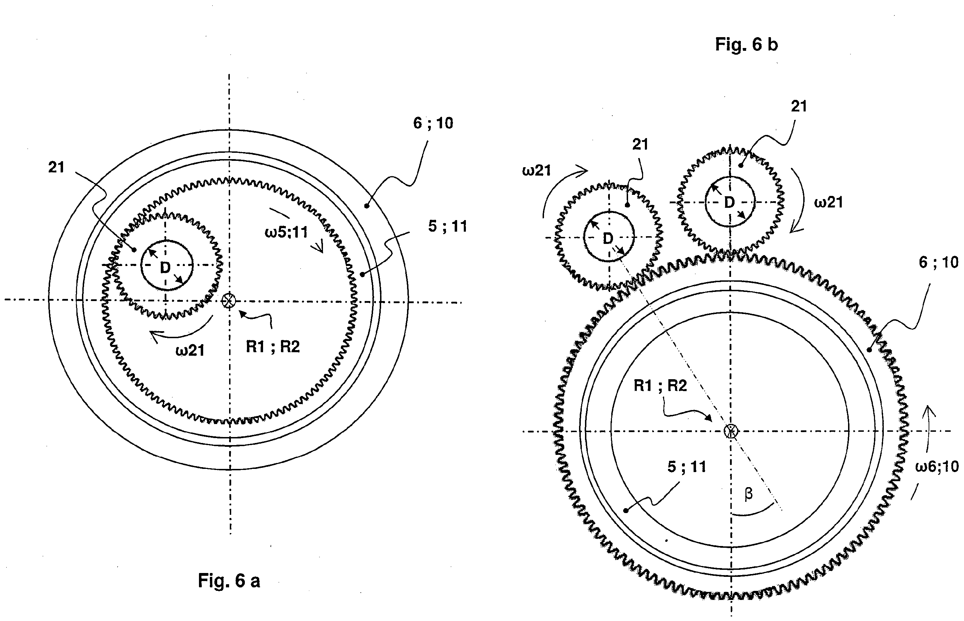

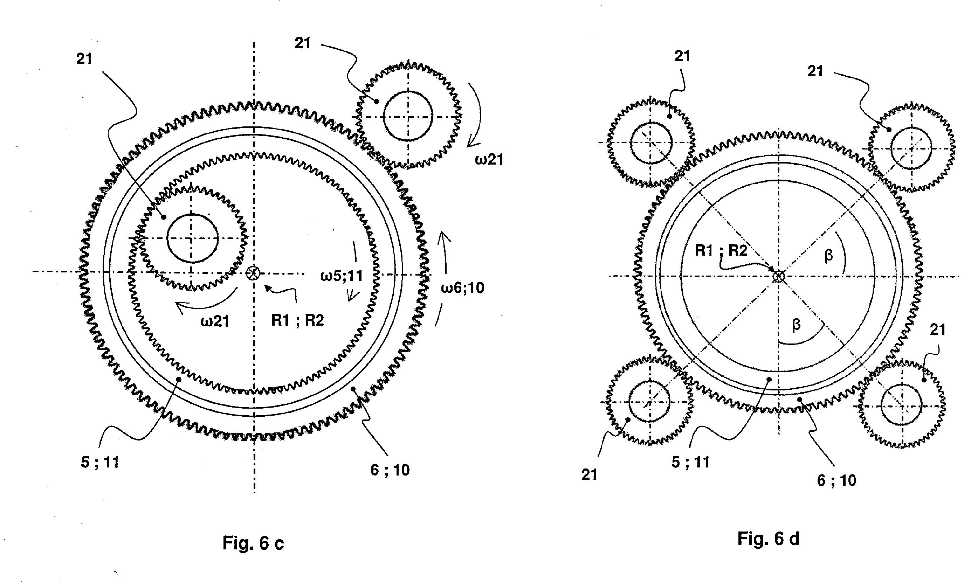

Dabei kann, wie beispielsweise die Zeichnung Fig. 6 a zeigt, das Ritzel von Innen in den Lagerring 5 ; 11 eingreifen und mit einer Innenverzahnung dieses Lagerrings kämmen. Alternativ können, wie beispielsweise die Zeichnung Fig. 6b zeigt, zwei gleichgeartete Vorrichtungen 1 an einem Außenring angreifen, um diesen über einen außenverzahnten Lagerring 6 ; 10 in dessen Verzahnung einzugreifen und mit dessen Außenverzahnung kämmen.

In einer weiteren Ausgestaltungsform dieser Anwendung können mehrere gleichgeartete Vorrichtungen 1 sowohl von Innen als auch von Außen in die jeweilige Verzahnung eines verzahnten Lagerringes 5 ; 6 ; 10 ; 11 eingreifen, wie beispielsweise durch Fig. 6c aufgezeigt ist.

Letztendlich können auch mehrere gleichgeartete Vorrichtungen 1 mit deren Ritzel/Zahnrad 21 an ein- und demselben verzahnten Lagerring eingreifen um diesen anzutreiben oder zu verstellen, so wie dies beispielhaft in Fig. 6d hinsichtlich des verzahnten Lagerringes 6 ; 10 dargestellt ist.

Von großem Vorteil ist die Anwendung der Erfindung auch in oder auf Fahrzeugen, beispielsweise Schwerlastfahrzeugen oder Baufahrzeugen, welche zumindest eine um eine Rotationsachse R2 drehbare/schwenkbare Baugruppe beinhalten:
Die bereits zitierten Zeichnungen der Fig. 6a, Fig. 6b und Fig. 6c sowie Fig. 6d sind hier gleichbedeutend zu betrachten:
Wird die Erfindung in diesem Sinne in oder auf Fahrzeugen eingesetzt, beispielsweise zum Antrieb oder zum Verstellen einer drehbare/schwenkbare Kran- oder Turm- oder Lafetten- oder Hubarmbaugruppe, so ist/sind auch dort eine oder mehrere Vorrichtung(en) 1 zum Antreiben oder zum Drehverstellen wenigstens eines Lagerringes 5 ; 6 ; 10 ; 11 der Baugruppe gegeben. Die eine oder mehrere Vorrichtung(en) 1 sind dort über je ein angekoppeltes oder ankoppelbares Ritzel/Zahnrad 21 mit wenigstens einem innen verzahnten Innenring 5 ; 11, alternativ mit wenigstens einen außen verzahnten Außenring 6 ; 10 gekoppelt, um diesen anzutreiben oder mit diesem zu kämmen.

Weitere Merkmale, Eigenschaften, Vorteile und Wirkungen auf der Grundlage der Vorrichtung und dem Verfahren der vorliegenden Erfindung ergeben sich aus den folgenden Zeichnungsbeispielen. Dabei ist auch eine Kombination der Merkmale ist denkbar und im Sinne der Erfindung.

### Zitierte Nichtpatentliteratur:

[BONF2013] :
Bonfiglioli. (company). Gearboxes. URL: http://www.bonfiglioli.com/en/wind/products/cdp/gearboxes?oid=126. Zugriff am: 12.04.2013.

**Bezugszeichenliste:**

| | | | |
|---|---|---|---|
| 1 | Vorrichtung bzw. Momentenlager | 26 | Welle |
| 2 | Blattlager | 27 | Mitten- oder Drehachse |
| 3 | Hauptlager | 100 | Anlage |
| 4 | Antrieb | 110 | Baugruppe/Plattform |
| 5 | Innenring | ω21 | Drehsinn |
| 6 | Außenring | ω6;10 | Drehsinn |
| 7 | Gondel | ω5;11 | Drehsinn |
| 8 | Rotor | β | Winkelabstand |
| 9 | Turmlager | WKA | Windkraftanlage |
| 10 | Außenring | WPG | Windkraftanlage |
| 11 | Innenring | R | Ringachse |
| 12 | Antrieb | R1 | Rotationsachse |
| 13 | Wälzkörperreihe | R2 | Rotationsachse |
| 14 | Wälzkörperreihe | D | Innendurchmesser |
| 15 | Gehäuseteil ; Ring | K | Schraubenkreis |
| 15a | Gehäusescheibe | A | Blatt |
| 16 | Gehäuseteil ; Ring | B | Blatt |
| 16a | Dichtungsring | C | Blatt |
| 16b | Dichtungsring | OS | Einrichtung |
| 17 | Befestigungskörper | M_{d} | Drehmoment |
| 18 | Befestigungskörper (ggfs. mit Ritzel) | M_{d}max | Drehmoment |
| 18a | Dichtungsring | P1 | Kupplungsplatte |
| 18b | Dichtungsring | P2 | Kupplungsplatte |
| 19 | Schraube | E1 | Element |
| 20 | Schraube | E2 | Element |
| 21 | Ritzel/Zahnrad | E3 | Element |
| 22 | Anschlussmöglichkeit | En | Element |
| 23 | Anschlussmöglichkeit | | |
| 24 | Laufbahnring | | |
| 25 | Laufbahnring | | |

## Patentansprüche

1. Momentenlager (1), umfassend zumindest eine Wälzlagerreihe (13; 14), und
- zwei ringförmige Gehäuseteile (15; 16), welche zueinander verdrehbar und zueinander konzentrisch angeordnet sind;
- wobei ein ringförmiges Gehäuseteil (16) durch mehrere Schneckenwellen (26) antreibbar ist,
- wobei das antreibbare Gehäuseteil (16) mit einem Ritzel (21) gekoppelt ist,
- wobei die Wälzkörperreihe (13; 14) zylinderrollenförmige, kugelförmige, kegelförmige oder tonnenförmige Wälzkörper beinhaltet,
**dadurch gekennzeichnet, dass**
das Momentenlager (1) mit den zwei zueinander verdrehbaren Gehäuseteilen (15, 16) und dem Ritzel (21) mittenfrei ausgebildet ist, sodass das Momentenlager (1) eine zylinderförmige Ausnehmung mit einem Innendurchmesser (D) aufweist.

2. Momentenlager (1) nach Anspruch 1, **dadurch gekennzeichnet, dass** der Eingriffsbereich der Schneckenwelle (26) zwischen einem ersten Gehäuseteil (15) und einem zweiten Gehäuseteil (16) angeordnet ist und die Schneckenwelle (26) mit einer Verzahnung des zweiten Gehäuseteils (16) kämmt.

3. Momentenlager (1) nach Anspruch 1 oder 2, **dadurch gekennzeichnet, dass** das Ritzel (21) mit mindestens einem innenverzahnten Innenring (5; 11) oder mit wenigstens einem außenverzahnten Außenring (6; 10) im Eingriff ist.

4. Momentenlager (1) nach einem der vorgenannten Ansprüche, **dadurch gekennzeichnet, dass** das Momentenlager (1) zusätzlich mindestens eine Anschlussmöglichkeit (23) für ein anschließbares Hemmungsglied oder für eine anschließbare mechanische Bremse, beispielsweise einer Permanentbremse, aufweist, vorzugsweise wobei das Hemmungsglied oder die Bremse in Richtung einer Mitten- oder Drehachse (27) der Schneckenwelle (26) anordbar ist.

5. Momentenlager (1) nach einem der vorgenannten Ansprüche, **dadurch gekennzeichnet, dass** das Momentenlager (1) eine Einrichtung (OS) aufweist, welche vom Ritzel (21) auf die Schneckenwelle (26) rückwirkende Drehmomente (Md) mindert oder begrenzt, insbesondere um eine mechanisch wirkende Überlast auf das Ritzel (21) und/oder die Schneckenwelle (26) und/oder die Gehäuseteile (15; 16) zu mindern oder zu begrenzen

6. Momentenlager (1) nach Anspruch 5, **dadurch gekennzeichnet, dass** die Einrichtung (OS) konzentrisch um eine Ringachse (R) und/oder zwischen dem Ritzel (21) und wenigstens einem Gehäuseteil (16) mechanisch kraftschlüssig angeordnet ist.

7. Momentenlager (1) nach Anspruch 6, **dadurch gekennzeichnet, dass** die Einrichtung (OS) zumindest zwei Kupplungsplatten (P1; P2) umfasst, welche jeweils kraftschlüssig kuppelbare Elemente (E1; E2; E3; En) aufweisen.

8. Momentenlager (1) nach einem der vorgenannten Ansprüche, **dadurch gekennzeichnet, dass** das Ritzel (21) und/oder wenigstens eines der Gehäuseteile (15; 16) einstückig aus einem Gusswerkstoff hergestellt ist.

9. Momentenlager (1) nach einem der vorgenannten Ansprüche, **dadurch gekennzeichnet, dass** ein Gehäuseteil (15) Befestigungsmittel, zum Bespiel ringförmig angeordnete Schrauben (K), zur Befestigung an wenigstens einem nicht zum Momentenlager gehörigen Teil aufweist.

10. Momentenlager (1) nach einem der vorgenannten Ansprüche, **dadurch gekennzeichnet, dass** zwischen dem erstem Gehäuseteil (15) und dem zweitem Gehäuseteil (16) ein mechanischer Spalt gegeben ist, welcher mittels einer elastischen Dichtungsring (16a; 16b;18a; 18b) direkt oder indirekt abgedichtet ist.

11. Momentenlager (1) nach wenigstens einem der vorgenannten Ansprüche, **dadurch gekennzeichnet, dass** eine Wälzkörperreihe (13; 14) zumindest einseitig an oder auf einem Laufbahnring (24; 25), welcher zwischen einem Gehäuseteil (15; 16) und Wälzkörperreihe (13; 14) im Inneren des Momentenlagers (1) befestigt ist oder eingelegt ist, abrollt, wobei die Wälzkörperreihe (13; 14) durch mehrere benachbarte gleichartige Rollkörper ausgebildet ist.

12. Windkraftanlage (WKA), umfassend eine um eine Rotationsachse (R1) schwenkbare Baugruppe (110) und ein Momentenlager (1) nach einem der vorangegangenen Ansprüche, **dadurch gekennzeichnet, dass** das Momentenlager (1) mit dem Ritzel (21) einen innenverzahnten Innenring (5, 11) oder einen außenverzahnten Außenring (6; 10) der Baugruppe (110) antreibt.

13. Fahrzeug, umfassend eine um eine Rotationsachse (R2) schwenkbare Baugruppe und ein Momentenlager (1) nach einem der Ansprüche 1 bis 11, **dadurch gekennzeichnet, dass** das Momentenlager (1) mit dem Ritzel (21) einen innenverzahnten Innenring (5; 11) oder einen außenverzahnten Außenring (6; 10) der Baugruppe antreibt.

14. Windkraftanlage (WKA) oder Fahrzeug nach einem der Ansprüche 12 oder 13, **dadurch gekennzeichnet, dass** mehrere gleichartige Momentenlager (1) nach einem der Ansprüche 1 bis 11 mit ihrem jeweiligen Ritzel (21) in einem gleichmäßigen Winkelabstand (β) in die Verzahnung eines oder mehrerer Ringe (5; 6; 10; 11) eingreifen.

## Claims

1. A torque bearing (1), comprising at least one row of roller bearings (13; 14) and
- two annular housing parts (15; 16) which are arranged rotatably to each other and concentrically;
- wherein an annular housing part (16) may be driven by several worm shafts (26),
- wherein the drivable housing part (16) is coupled with an pinion (21),
- wherein the row of roller bearings (13; 14) comprises cylindrical, spherical, conical or barrel-shaped rolling elements,
**characterised in that**
the torque bearing (1) with the two housing parts (15; 16) which are rotatable to each other and the pinion (21) is implemented with an open centre so that the torque bearing (1) comprises a cylindrical recess with an inner diameter (D).

2. The torque bearing (1) according to Claim 1, **characterised in that** the angle of engagement of the worm shaft (26) is arranged between a first housing part (15) and a second housing part (16) and the worm shaft (26) meshes with a toothing of the second housing part (16).

3. The torque bearing (1) according to Claim 1 or 2, **characterised in that** the pinion (21) is in engagement with at least one internally toothed inner ring (5; 11) or at least with one externally toothed outer ring (6; 10).

4. The torque bearing (1) according to any of the previous claims, **characterised in that** the torque bearing (1) additionally comprises at least one possible connection means (23) for a connectable blocking member or for a connectable mechanical brake, for example a permanent brake, wherein preferably the bloching member or the brake may be arranged in the direction of a centre axis or an axis of rotation (27) of the worm shaft.

5. The torque bearing (1) according to any of the previous claims, **characterised in that** the torque bearing (1) comprises a device (OS) which reduces or limits torques acting back from the pinion (21) to the worm shaft (26), in particular in order to reduce or to limit a mechanically acting overload on the pinion (21) and/or the worm shaft (26) and/or the housing parts (15; 16).

6. The torque bearing (1) according to Claim 5, **characterised in that** the device (OS) is arranged concentrically about a ring axis (R) and/or between the pinion (21) and at least one housing part (16) in a mechanically non-positive manner.

7. The torque bearing (1) according to Claim 6, **characterised in that** the device (OS) comprises at least two coupling plates P1; P2), each of which comprises elements (E1; E2; E3; En) which may be coupled in a non-positive manner.

8. The torque bearing (1) according to any of the previous claims, **characterised in that** the pinion (21) and/or at least one of the housing parts (15; 16) is formed integrally from a casting material.

9. The torque bearing (1) according to any of the previous claims, **characterised in that** one housing part (15) comprises fastening means, for example screws (K), which are arranged in a ring pattern for attachment to at least one part not associated with the torque bearing.

10. The torque bearing (1) according to any of the previous claims, **characterised in that** a mechanical gap is given between the first housing part (15) and the second housing part (16), which is directly or indirectly sealed by means of an elastic sealing ring (16a; 16b; 18a; 18b).

11. The torque bearing (1) according to at least one of the previous claims, **characterised in that** a row of roller bearings (13; 14) rolls at least one-sided at or on a race ring (13; 14), which is fastened within or inserted into the torque bearing (1), wherein the row of roller bearings (13; 14) is formed by several neighbouring similar rolling elements.

12. A wind power plant (WKA), comprising an assembly (110) which is pivotable about an axis or rotation (R1) and a torque bearing (1) according to any of the previous claims, **characterised in that** the torque bearing (1) drives an internally toothed inner ring (5, 11) or an externally toothed outer ring (6; 10) of the assembly (110) via the pinion (21).

13. A vehicle, comprising an assembly (110) which is pivotable about an axis or rotation (R2) and a torque bearing (1) according to any of Claims 1 to 11, **characterised in that** the torque bearing (1) drives an internally toothed inner ring (5; 11) or an externally toothed outer ring (6; 10) of the assembly via the pinion (21).

14. The wind power plant (WKA) or the vehicle according to one of Claims 12 or 13, **characterised in that** several similar torque bearings (1) according to any of Claims 1 to 11 engage with the toothing of one or several rings (5; 6; 10; 11) in a uniform angular distance.

## Revendications

1. Palier à couple (1) comprenant au moins une rangée de roulements (13 ; 14), et
- deux parties de carter annulaires (15 ; 16), qui peuvent tourner l'une par rapport à l'autre et qui sont disposées concentriquement l'une à l'autre ;
- dans lequel une partie de carter annulaire (16) peut être entraînée par plusieurs arbres à vis sans fin (26),
- dans lequel la partie de carter (16) pouvant être entraînée est accouplée à un pignon (21),
- dans lequel la rangée de corps de roulement (13 ; 14) comprend des corps de roulement en forme de rouleaux cylindriques, de forme sphérique, de forme conique ou en forme de tonneau,
**caractérisé en ce que** le palier à couple (1) avec les deux parties de carter (15, 16) pouvant tourner l'une par rapport à l'autre et le pignon (21) est conçu sans centre, de sorte que le palier à couple (1) présente un évidement cylindrique avec un diamètre intérieur (D).

2. Palier à couple (1) selon la revendication 1, **caractérisé en ce que** la zone d'engagement de l'arbre à vis sans fin (26) est disposée entre une première partie de carter (15) et une deuxième partie de carter (16) et l'arbre à vis sans fin (26) engrène avec une denture de la deuxième partie de carter (16).

3. Palier à couple (1) selon la revendication 1 ou 2, **caractérisé en ce que** le pignon (21) est en prise avec au moins une bague intérieure à denture intérieure (5 ; 11) ou avec au moins une bague extérieure à denture extérieure (6 ; 10).

4. Palier à couple (1) selon l'une des revendications précédentes, **caractérisé en ce que** le palier à couple (1) présente en outre au moins une possibilité de raccordement (23) d'un organe de blocage raccordable ou d'un frein mécanique raccordable, par exemple un frein permanent, de préférence l'organe de blocage ou le frein pouvant être disposé dans la direction d'un axe médian ou de rotation (27) de l'arbre à vis sans fin (26).

5. Palier à couple (1) selon l'une des revendications précédentes, **caractérisé en ce que** le palier à couple (1) présente un dispositif (OS) qui réduit ou limite les couples (Md) agissant en retour du pignon (21) sur l'arbre à vis sans fin (26), en particulier pour réduire ou limiter une surcharge agissant mécaniquement sur le pignon (21) et/ou l'arbre à vis sans fin (26) et/ou les parties de carter (15 ; 16).

6. Palier à couple (1) selon la revendication 5, **caractérisé en ce que** le dispositif (OS) est disposé concentriquement autour d'un axe de bague (R) et/ou entre le pignon (21) et au moins une partie de carter (16) par une liaison par force mécanique.

7. Palier à couple (1) selon la revendication 6, **caractérisé en ce que** le dispositif (OS) comprend au moins deux plateaux d'accouplement (P1 ; P2), qui présentent chacun des éléments (E1 ; E2 ; E3 ; En) pouvant être accouplés par force.

8. Palier à couple (1) selon l'une des revendications précédentes, **caractérisé en ce que** le pignon (21) et/ou au moins l'une des parties du carter (15 ; 16) est fabriqué d'une seule pièce à partir d'un matériau coulable.

9. Palier à couple (1) selon l'une des revendications précédentes, **caractérisé en ce qu'**une partie de carter (15) présente des moyens de fixation, par exemple des vis (K) disposées de manière annulaire, pour la fixation à au moins une partie n'appartenant pas au palier à couple.

10. Palier à couple (1) selon l'une des revendications précédentes, **caractérisé en ce qu'**une fente mécanique est prévue entre la première partie de carter (15) et la deuxième partie de carter (16), laquelle est rendue étanche directement ou indirectement au moyen d'une bague d'étanchéité élastique (16a ; 16b ; 18a ; 18b).

11. Palier à couple (1) selon au moins l'une des revendications précédentes, **caractérisé en ce qu'**une rangée de corps de roulement (13 ; 14) roule au moins d'un côté sur une bague de roulement (24 ; 25) qui est fixée ou insérée entre une partie de carter (15 ; 16) et une rangée de corps de roulement (13 ; 14) à l'intérieur du palier à couple (1), la rangée de corps de roulement (13 ; 14) étant formée par plusieurs corps roulants adjacents identiques.

12. Éolienne (WKA), comprenant un ensemble (110) pouvant pivoter autour d'un axe de rotation (R1) et un palier à couple (1) selon l'une des revendications précédentes, **caractérisée en ce que** le palier à couple (1) entraîne avec le pignon (21) une bague intérieure à denture intérieure (5, 11) ou une bague extérieure à denture extérieure (6 ; 10) de l'ensemble (110).

13. Véhicule, comprenant un ensemble pouvant pivoter autour d'un axe de rotation (R2) et un palier à couple (1) selon l'une des revendications 1 à 11, **caractérisé en ce que** le palier à couple (1) entraîne avec le pignon (21) une bague intérieure à denture intérieure (5 ; 11) ou une bague extérieure à denture extérieure (6 ; 10) de l'ensemble.

14. Éolienne (WKA) ou véhicule selon l'une des revendications 12 ou 13, **caractérisé en ce que** plusieurs paliers à couple (1) identiques selon l'une des revendications 1 à 11 s'engagent avec leur pignon (21) respectif à une distance angulaire (β) uniforme dans la denture d'une ou plusieurs bagues (5 ; 6 ; 10 ; 11).
